# EUROPÄISCHE PATENTSCHRIFT

(11) **EP 2 396 572 B1**
(45) Veröffentlichungstag und Bekanntmachung des Hinweises auf die Patenterteilung: **06.03.2013**
(21) Anmeldenummer: 10701851.7
(22) Anmeldetag: 26.01.2010
(51) Int. Cl.: F16H 61/24

(54) **EINRICHTUNG ZUM ERZEUGEN EINER SCHALTKRAFT ODER WÄHLKRAFT IN EINEM HANDSCHALTGETRIEBE**
ARRANGEMENT FOR CREATING A SHIFTING FORCE OR SELECTION FORCE IN A MANUAL TRANSMISSION
DISPOSITIF DESTINÉ À LA PRODUCTION D'UNE FORCE DE COMMUTATION OU D'UNE FORCE DE SÉLECTION DANS UNE BOÎTE DE VITESSES À COMMANDE MANUELLE

(30) Priorität: 13.02.2009 DE 102009000858
(43) Veröffentlichungstag der Anmeldung: 21.12.2011
(73) Patentinhaber: ZF Friedrichshafen AG, 88038 Friedrichshafen (DE)
(72) Erfinder: WERDIN, Philipp, 13467 Berlin (DE)
(86) Internationale Anmeldenummer: PCT/EP2010/050834
(87) Internationale Veröffentlichungsnummer: WO 2010/091945

(56) Entgegenhaltungen:
- WO-A1-2007/129902
- DE-A1- 10 229 320
- DE-A1-102004 060 056
- DE-A1-102007 010 384
- US-A1- 2003 000 329

## Beschreibung

Die Erfindung betrifft eine Einrichtung zum Erzeugen einer Schaltkraft oder Wählkraft in einem Handschaltgetriebe für Kraftfahrzeuge gemäß dem Oberbegriff des Patentanspruchs 1.

Handschaltgetriebe für Kraftfahrzeuge werden vom Fahrer mit einem Handschalthebel betätigt, welcher aus einer Ruheposition heraus in einer so genannten Quergasse bzw. Wählgasse und in mehreren zur Quergasse senkrechten Schaltgassen bewegt werden kann, wobei die Ruheposition im allgemeinen einer bestimmten Schaltgasse entspricht. Ein Schaltvorgang kann somit einerseits aus einer Querbewegung für die Wahl einer Schaltgasse (auch als Wählen bezeichnet) und einer Längsbewegung in einer Schaltgasse (Schalten) bestehen, durch die ein vorgegebenes Zahnrad des Schaltgetriebes in den Leistungsfluss des Getriebes gebracht wird.

Um dem Fahrer die korrekte Wahl der zu schaltenden Gänge zu erleichtern, werden im Getriebe Wähl- und/oder Schaltkräfte erzeugt, welche der Schaltbewegung des Fahrers mehr oder weniger stark entgegenwirken. Insbesondere die Wählkräfte ermöglichen dem Fahrer eine haptische Unterscheidung der einzelnen Schaltgassen, und zwar üblicherweise über unterschiedliche Wählkräfte für die einzelnen Gassen. Nachfolgend wird gelegentlich der Einfachheit halber für beide Bewegungen der Begriff "Schalten" verwendet, da sie im Zusammenhang mit der vorliegenden Erfindung gleichwertig sind und die weiter unten beschriebene erfindungsgemäße Vorrichtung alternativ sowohl zur Erzeugung von Wähl- als auch von Schaltkräften nutzbar ist.

Die Wähl- und/oder Schaltkräfte werden durch gesonderte Einrichtungen erzeugt, die mit dem Handschalthebel über Verbindungslenker oder dergleichen gekoppelt sind. Die DE 10 2004 060 056 A1 zeigt eine Einrichtung der im Oberbegriff des Anspruchs 1 genannten Art, bei der auf der mit dem Handschalthebel verbundenen Schaltwelle ein eine Anlagerolle tragendes Schwingarmsystem angeordnet ist, wobei die Anlagerolle an einem schwenkbar gelagerten, federbelasteten Konturelement anliegt. Bei einer Schaltbewegung des Handschalthebels wird die Schaltwelle verdreht, wobei sich die Anlagerolle entlang dem Konturelement bewegt und dieses mehr oder weniger weit auslenkt, wodurch größere oder kleinere Schaltkräfte erzeugt werden.

Besondere Schaltgassen, etwa die Rückwärtsgang-Gasse, können zusätzlich zu einer hohen Schaltkraft durch eine erhöhte Reibung bei der Schaltbewegung gekennzeichnet sein. Diese Reibung bewirkt einen Hysterese-Effekt, d.h. beim Anwählen der betreffenden Schaltgasse wirken sowohl die Wählkraft als auch die Reibungskraft der Wählbewegung entgegen, während die Rückstellbewegung aus dieser Schaltgasse durch die Wählkraft unterstützt wird. Die Hysterese hat den Vorteil, dass die Wählkräfte zur Anwahl der betreffenden Schaltgasse in gewünschter Weise hoch, die Rückstellkräfte jedoch niedrig sind.

Wie bereits beschrieben wurde, wird die Wählkraft bzw. Schaltkraft durch unterschiedliche Auslenkung eines federnd vorgespannten Konturelementes oder Konturfolgeelementes bei der Schalt- bzw. Wählbewegung erzeugt. Die gewünschte Reibung entsteht im allgemeinen zwischen dem Konturelement und dem Konturfolgeelement, und sie ist von der wirkenden Federkraft sowie von den Reibungseigenschaften zwischen Konturelement und Konturfolgeelement abhängig. Wenn eine große Reibung erzeugt werden soll, so wird dies beispielsweise dadurch erreicht, dass zwischen Konturelement und Konturfolgeelement eine Gleitreibung und keine Rollreibung vorgesehen wird. Da dann sowohl die Schaltkraft bzw. Wählkraft als auch die Reibungskraft von der wirkenden Federkraft abhängen, kann eine gegebenenfalls gewollte hohe Reibungskraft nur in Verbindung mit einer hohen Schaltkraft erreicht werden, was nicht immer erwünscht ist. Außerdem hat es sich gezeigt, dass die tatsächliche, von der wirkenden Federkraft und der gewählten Reibpaarung abhängige Reibungskraft bei der bekannten Anordnung nicht genau bestimmt bzw. bestimmten Schalt- bzw. Wählwinkeln zugeordnet werden kann.

Vor diesem Hintergrund liegt der Erfindung die Aufgabe zugrunde, eine Einrichtung der im Oberbegriff des Anspruchs 1 genannten Art zu schaffen, bei der eine definierte Reibung in Abhängigkeit vom Schalt- bzw. Wählwinkel auch bei geringen Haltekräften erzeugt werden kann.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass eine Trennung der Mittel zum Erzeugen der Schaltkraft einerseits und der Reibungskraft andererseits es ermöglicht, von der Schaltkraft bzw. Wählkraft unabhängige, definierte Reibungskräfte zu erzeugen.

Die Erfindung geht demnach aus von einer Einrichtung zum Erzeugen einer Schaltkraft bzw. Wählkraft in einem Handschaltgetriebe für Kraftfahrzeuge, umfassend ein Konturelement und ein mit diesem zusammenwirkendes Konturfolgeelement, von denen eines bei einer Schalt- bzw. Wählbewegung eines Handschalthebels gegen die Kraft einer Feder ausgelenkt wird. Zur Lösung der gestellten Aufgabe ist dabei vorgesehen, dass die Einrichtung eine zweite, ein zweites Konturelement und ein zweites Konturfolgeelement umfassende, mit dem Handschalthebel antriebsverbundene Kontursteueranordnung umfasst, deren bei einer Schalt- bzw. Wählbewegung des Handschalthebels ausgelenktes Element eine Reibungsbremse betätigt.

Bei einer Schalt- bzw. Wählbewegung des Handschalthebels wird einerseits über das erste Konturelement und das diesen zugeordnete Konturfolgeelement eine Schalt- bzw. Wählkraft erzeugt, und andererseits unabhängig davon über das zweite Konturelement und das zugeordnete Konturfolgeelement eine Reibungskraft. Die Schalt- bzw. Wählkraft und die Reibungskraft können durch entsprechende Auslegung der jeweiligen Kontursteueranordnungen unabhängig von einander gestaltet werden, so dass beispielsweise auch bei einer geringen Schalt- bzw. Wählkraft eine verhältnismäßig hohe Reibungskraft erzielbar ist oder umgekehrt.

Um die Einrichtung konstruktiv möglichst einfach zu gestalten, ist gemäß einer Ausgestaltung der Erfindung vorgesehen, dass das erste Konturelement und das zweite Konturelement an einem gemeinsamen, mit dem Handschalthebel wirkverbundenen und bei einer Schalt- bzw. Wählbewegung verstellten Konturelementträger (Trägerwelle) angeordnet sind, und dass das zweite Konturelement mit einem Konturfolgeelement zusammenwirkt, welches Konturelement bei einer Schalt- bzw. Wählbewegung ausgelenkt wird und die Reibungsbremse betätigt.

Gemäß einer bevorzugten konstruktiven Ausgestaltung der Erfindung ist der Konturelementträger als in einem ortsfesten Gehäuse drehbar gelagerte Trägerwelle ausgebildet, deren eines Ende mit dem Handschalthebel antriebsverbunden ist und an dessen anderem Ende die beiden bei einer Drehung der Trägerwelle verstellten Konturelemente angeordnet sind, wie anhand eines Ausführungsbeispieles genauer dargelegt wird.

Eine weitere konstruktive Ausgestaltung der Erfindung sieht vor, dass die Trägerwelle mit axialem Spiel in dem Gehäuse gelagert ist, dass an der Trägerwelle einerseits und an dem Gehäuse andererseits zusammenwirkende, durch eine Axialbewegung der Trägerwelle relativ zum Gehäuse in einer ersten Axialrichtung in Bremseingriff und durch eine Gegenbewegung außer Bremseingriff bringbare Reibflächen vorgesehen sind, und dass das zweite Konturfolgeelement sich am Gehäuse federnd abstützt derart, dass die Trägerwelle bei einer Verstellung des zweiten Konturelementes relativ zum Gehäuse in der ersten Axialrichtung verschoben wird, so dass die Reibflächen in Bremseingriff gebracht werden.

Die Trägerwelle hat demnach zwei Funktionen, indem sie einerseits die beiden Konturelemente trägt und diese durch Drehung der Trägerwelle um die Trägerwellenlängsachse verstellt, und indem sie andererseits ein Bestandteil der Reibungsbremse ist, die durch Verschiebung der Trägerwelle in Richtung der Trägerwellenlängsachse aktiviert bzw. gelöst wird.

Gemäß einer weiteren Ausgestaltung der Erfindung ist das zweite Konturfolgeelement als ein zur Längsachse der Trägerwelle paralleler, federnd am Gehäuse sich abstützender Federbolzen ausgebildet. Bei einer Verstellung des zweiten Konturelementes wird beispielsweise ab einem vorgegebenen Schalt bzw. Wählwinkel die den Federbolzen belastende Feder zusammengedrückt und verstärkt so über die auf das Konturelement wirkende Reaktionskraft die Bremskraft.

Der Federbolzen umfasst vorzugsweise eine am Gehäuse fest angeordnete, zum zugeordneten Konturelement hin offene Hülse und ein in dieser verschiebbar gelagertes, durch eine in der Hülse angeordnete Druckfeder in Richtung zu dem Konturelement hin vorgespanntes Andruckelement. Das Andruckelement besteht seinerseits aus einem in der Hülse axial verschiebbaren Kolben und einer an dessen dem Konturelement zugewandten Seite rollend gelagerten, am Konturelement anliegenden Kugel. Das zweite Konturelement und das zugeordnete Konturfolgeelement wirken demnach über eine Rollreibung zusammen, so dass sie an der gewünschten Reibungskraft im wesentlichen nicht beteiligt sind. Diese wird nur durch die Reibungsbremse erzeugt.

Eine weitere Ausgestaltung der Erfindung sieht vor, dass die Reibfläche der Trägerwelle durch einen an dieser ausgebildeten Außenkonusabschnitt gebildet ist, und dass die Reibfläche des Gehäuses durch einen in einer die Trägerwelle aufnehmenden Gehäusebohrung angeordneten Ring mit einem zum Außenkonusabschnitt komplementären Innenkonus gebildet ist. Der den Innenkonus bildende Ring kann demnach unabhängig von dem Material des Gehäuses so ausgewählt werden, dass er zusammen mit dem Außenkonusabschnitt der Trägerwelle eine günstige Reibpaarung ergibt.

Eine konstruktive Ausgestaltung der Trägerwelle sieht vor, dass an ihrem antriebsseitigen Ende ein mit dem Handschalthebel über Verbindungsmittel gekoppelter äußerer Betätigungshebel angeordnet ist, über den dieser bei einer Schalt- bzw. Wählbewegung verdreht wird, und dass an dem abtriebsseitigen Ende der Trägerwelle ein zweiarmiger innerer Betätigungshebel angeordnet ist, an dessen einem Ende das erste Konturelement und an dessen zweitem Ende das zweite Konturelement angeordnet ist.

Die Erfindung lässt sich anhand eines Ausführungsbeispiels weiter erläutern. Dazu ist der Beschreibung eine Zeichnung beigefügt. In dieser zeigt
- Fig. 1: eine Einrichtung zum Erzeugen einer Wählkraft in einer Längsschnittansicht, und
- Fig. 2: eine Einzelheit aus der Fig. 1.

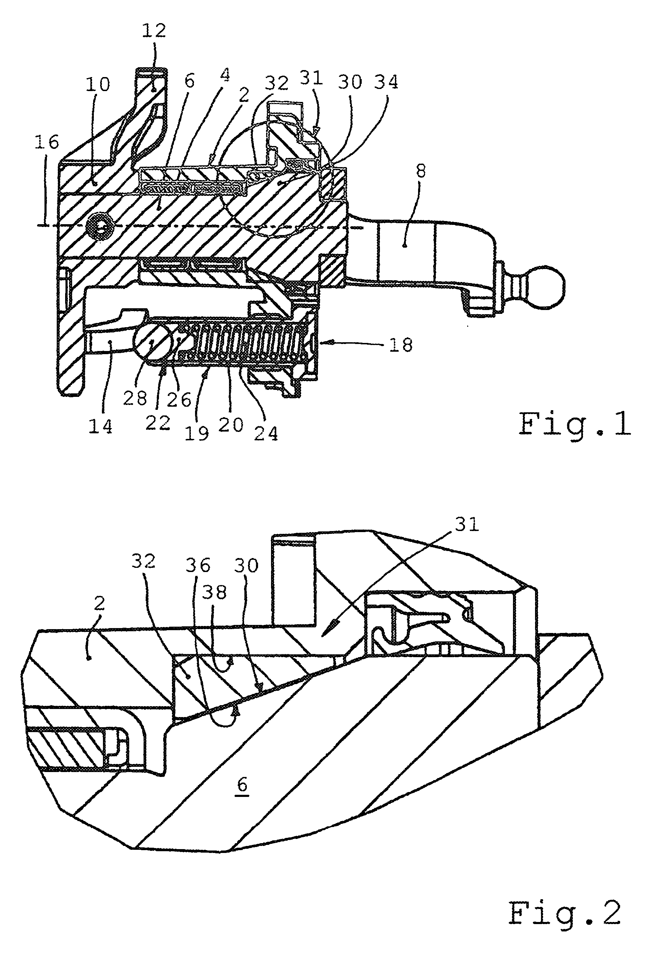

Die in Fig. 1 dargestellte Einrichtung zum Erzeugen einer Wählkraft umfasst ein beispielsweise in einer Getriebeanordnung fest angeordnetes Gehäuse 2 und eine in diesem über ein zweireihiges Nadellager 4 drehbar gelagerte Trägerwelle 6, an deren antriebsseitigem, in Fig. 1 rechten Ende ein äußerer Betätigungshebel 8 angeordnet ist. An dem von diesem dem antriebsseitigen Ende abgewandten, in Fig. 1 linken Ende der Trägerwelle 6 ist einen zweiarmiger, innerer Betätigungshebel 10 befestigt, an dessen einem Ende ein erstes Konturelement 12 und an dessen anderem Ende ein zweites Konturelement 14 angeordnet ist.

An dem Gehäuse 2 ist ein Konturfolgeelement 18 angeordnet, das aus einem zur Längsachse 16 der Trägerwelle 6 parallelen Federbolzen 19 gebildet ist, welcher aus einer zum zweiten Konturelement 14 hin offenen Hülse 20, einem in dieser axial verschiebbar gelagerten Andruckelement 22 und einer das Andruckelement 22 zum Konturelement 14 hin belastenden Feder 24 gebildet ist. Das Druckelement 22 besteht aus einem Kolben 26 und einer an dessen dem Konturelement 14 zugewandten Seite rollend gelagerten, an dem Konturelement 14 anliegenden Kugel 28.

Die Trägerwelle 6 ist in dem Gehäuse 2 mit axialem Spiel gelagert, so dass sie sich in axialer Richtung geringfügig bewegen kann. An der Trägerwelle 6 ist ein Außenkonusabschnitt 30 ausgebildet, welcher mit einem in der die Trägerwelle 6 aufnehmenden Gehäusebohrung angeordneten Ring 32 mit einem zum Außenkonusabschnitt 30 komplementären Innenkonus 36 zusammenwirkt. Der Außenkonusabschnitt 30 und der Innenkonus des Ringes 32 sind als Reibflächen ausgebildet und bilden eine Reibungsbremse 31. Die Funktion dieser Einrichtung ist wie folgt:

Wenn der Handschalthebel eine Wählbewegung ausführt, so wird diese über nicht dargestellte Verbindungsmittel auf den äußeren Betätigungshebei 8 übertragen, wodurch die Trägerwelle 6 um deren Längsachse 16 verdreht wird. Dabei wird einerseits über das erste Konturelement 12 und ein damit zusammenwirkendes, nicht dargestelltes Konturfolgeelement in an sich bekannter Weise eine Wählkraft erzeugt.

Gleichzeitig wird über das zweite Konturelement 14 und den an diesem federnd anliegenden Federbolzen 19 z.B. ab einem vorgegebenen Wählwinkel eine die Trägerwelle 6 in Fig. 1 nach links verschiebende Kraft erzeugt, welche die aus dem Außenkonusabschnitt 30 und dem Innenkonus 36 des Ringes 32 gebildete Reibungsbremse in Bremseingriff bringt, wobei eine durch die Verlaufsform des zweiten Konturelementes 14 bestimmte, vom Drehwinkel der Trägerwelle 6 und damit vom Wählweg abhängige Reibungskraft erzeugt wird. Diese Reibungskraft ist unabhängig von der durch die Kontur des ersten Konturelementes bestimmten Wählkraft. Sie kann durch die Wahl des Konuswinkels und der Reibpaarung genau bestimmt werden.

Fig. 2 zeigt den in Fig. 1 im Kreis 34 dargestellten Ausschnitt in einer vergrößerten Ansicht. Man erkennt den Außenkonusabschnitt 30 der Trägerwelle 6 und den Ring 32 mit dem an diesem ausgebildeten Innenkonus 36, welcher in einer entsprechenden Ausnehmung 38 des Gehäuses 2 angeordnet ist.

### Bezugszeichen

- 2: Gehäuse
- 4: Nadellager
- 6: Trägerwelle; Konturelementträger
- 8: Äußerer Betätigungshebel
- 10: Innerer Betätigungshebel
- 12: Erstes Konturelement
- 14: Zweites Konturelement
- 16: Längsachse
- 18: Konturfolgeelement
- 19: Federbolzen
- 20: Hülse
- 22: Andruckelement
- 24: Feder
- 26: Kolben
- 28: Kugel
- 30: Außenkonusabschnitt
- 31: Reibungsbremse
- 32: Ring
- 34: Kreis
- 36: Innenkonus
- 38: Ausnehmung

## Patentansprüche

1. Einrichtung zum Erzeugen einer Schaltkraft bzw. Wählkraft in einem Handschaltgetriebe für Kraftfahrzeuge, umfassend ein Konturelement (12) und ein mit diesem zusammenwirkendes Konturfolgeelement, von denen eines bei einer Schalt- bzw. Wählbewegung eines Handschalthebels gegen die Kraft einer Feder ausgelenkt wird, **dadurch gekennzeichnet, dass** die Einrichtung eine zweite, ein zweites Konturelement (14) und ein zweites Konturfolgeelement (18) umfassende, mit dem Handschalthebel antriebsverbundene Kontursteueranordnung umfasst, deren bei einer Schalt- bzw. Wählbewegung des Handschalthebels ausgelenktes Element eine Reibungsbremse (31) betätigt.

2. Einrichtung nach Anspruch 1, **dadurch gekennzeichnet, dass** das erste Konturelement (12) und das zweite Konturelement (14) an einem gemeinsamen, mit dem Handschalthebel wirkverbundenen und bei einer Schalt- bzw. Wählbewegung verstellten Konturelementträger (6) angeordnet sind, und dass das zweite Konturelement (14) mit einem Konturfolgeelement (18) zusammenwirkt, welches (14) bei einer Schalt- bzw. Wählbewegung ausgelenkt wird und die Reibungsbremse (31) betätigt.

3. Einrichtung nach Anspruch 2, **dadurch gekennzeichnet, dass** der Konturelementträger als in einem ortsfesten Gehäuse (2) drehbar gelagerte Trägerwelle (6) ausgebildet ist, deren eines Ende mit dem Handschalthebel antriebsverbunden ist und an dessen anderem Ende die beiden bei einer Drehung der Trägerwelle (6) verstellten Konturelemente (12, 14) angeordnet sind.

4. Einrichtung nach Anspruch 3, **dadurch gekennzeichnet, dass** die Trägerwelle (6) mit axialem Spiel in dem Gehäuse (2) gelagert ist, dass an der Trägerwelle (6) einerseits und am Gehäuse (2) andererseits zusammenwirkende, durch eine Axialbewegung der Trägerwelle (6) relativ zum Gehäuse (2) in einer ersten Axialrichtung in Bremseingriff und durch eine Gegenbewegung außer Bremseingriff bringbare Reibflächen vorgesehen sind, und dass das zweite Konturfolgeelement (18) sich am Gehäuse (2) federnd abstützt derart, dass bei einer Verdrehung der Trägerwelle (6) infolge einer Schalt- bzw. Wählbewegung die Trägerwelle (6) relativ zu dem Gehäuse (2) in der ersten Axialrichtung verschoben wird.

5. Einrichtung nach Anspruch 4, **dadurch gekennzeichnet, dass** das zweite Konturfolgeelement (18) als ein zur Längsachse (16) der Trägerwelle (6) paralleler, federnd an dem Gehäuse (2) sich abstützender Federbolzen (19) ausgebildet ist.

6. Einrichtung nach Anspruch 5, **dadurch gekennzeichnet, dass** der Federbolzen (19) eine am Gehäuse (2) fest angeordnete, zum zugeordneten Konturelement (14) hin offene Hülse (20) und ein in dieser axial verschiebbar gelagertes, durch eine in der Hülse (20) angeordnete Feder (24) in Richtung zu dem Konturelement (14) hin vorgespanntes Andruckelement (22) umfasst.

7. Einrichtung nach Anspruch 6, **dadurch gekennzeichnet, dass** das Andruckelement (22) einen in der Hülse (20) verschiebbaren Kolben (26) und eine an dessen dem Konturelement (14) zugewandten Seite rollend gelagerte, am Konturelement (14) anliegende Kugel (28) umfasst.

8. Einrichtung nach einem der Ansprüche 3 bis 7, **dadurch gekennzeichnet, dass** die Reibfläche der Trägerwelle (6) durch einen an dieser ausgebildeten Außenkonusabschnitt (30) gebildet ist, und dass die Reibfläche des Gehäuses (2) durch einen in einer die Trägerwelle (6) aufnehmenden Gehäusebohrung angeordneten Ring (32) mit einem zum Außenkonusabschnitt (30) komplementären Innenkonus (36) gebildet ist.

9. Einrichtung nach einem der Ansprüche 3 bis 8, **dadurch gekennzeichnet, dass** an dem antriebsseitigen Ende der Trägerwelle (6) ein mit dem Handschalthebel über Verbindungsmittel gekoppelter, äußerer Betätigungshebel (8) angeordnet ist, und dass an dem abtriebsseitigen Ende der Trägerwelle (6) ein zweiarmiger, innerer Betätigungshebel (10) angeordnet ist, an dessen einem Ende das erste Konturelement (12) und an dessen zweitem Ende das zweite Konturelement (14) angeordnet ist.

## Claims

1. Arrangement for creating a shifting force or selection force in a manual transmission for motor vehicles, comprising a contour element (12) and a contour following element which interacts with said contour element (12), of which one, in the case of a shifting or selection movement of a manual shift lever, is deflected counter to the force of a spring, **characterized in that** the arrangement comprises a second contour control arrangement, which comprises a second contour element (14) and a second contour following element (18) and is drive-connected to the manual shift lever, wherein the element of the contour control arrangement deflected in the case of a shifting or selection movement of the manual shift lever actuates a friction brake (31).

2. Arrangement according to Claim 1, **characterized in that** the first contour element (12) and the second contour element (14) are arranged on a common contour element carrier (6), which is operatively connected to the manual shift lever and adjusted in the case of a shifting or selection movement, and **in that** the second contour element (14) interacts with a contour following element (18) which (14) is deflected in the case of a shifting or selection movement and actuates the friction brake (31).

3. Arrangement according to Claim 2, **characterized in that** the contour element carrier is formed as a carrier shaft (6) mounted rotatably in a stationary housing (2), one end of which carrier shaft (6) is drive-connected to the manual shift lever and at the other end of which both contour elements (12, 14) adjusted in the case of a rotation of the carrier shaft (6) are arranged.

4. Arrangement according to Claim 3, **characterized in that** the carrier shaft (6) is mounted with axial play in the housing (2), **in that** frictional surfaces, which can be brought into braking engagement by an axial movement of the carrier shaft (6) relative to the housing (2) in a first axial direction and out of braking engagement by a countermovement and which interact on the carrier shaft (6) on the one hand and on the housing (2) on the other hand, are provided, and **in that** the second contour following element (18) is supported resiliently on the housing (2) in such a manner that, in the case of a rotation of the carrier shaft (6) as a result of a shifting or selection movement, the carrier shaft (6) is displaced in the first axial direction relative to the housing (2).

5. Arrangement according to Claim 4, **characterized in that** the second contour following element (18) is formed as a spring bolt (19) which is parallel to the longitudinal axis (16) of the carrier shaft (6) and supported resiliently on the housing (2).

6. Arrangement according to Claim 5, **characterized in that** the spring bolt (19) comprises a sleeve (20) arranged fixedly on the housing (2) and open towards the assigned contour element (14) and a pressure element (22) mounted axially displaceably in said sleeve and pretensioned by a spring (24) arranged in the sleeve (20) in the direction of the contour element (14).

7. Arrangement according to Claim 6, **characterized in that** the pressure element (22) comprises a piston (26) which is displaceable in the sleeve (20) and a ball (28) mounted in a rolling manner on its side facing the contour element (14) and adjoining the contour element (14).

8. Arrangement according to one of Claims 3 to 7, **characterized in that** the frictional surface of the carrier shaft (6) is formed by an outer cone portion (30) formed thereon, and **in that** the frictional surface of the housing (2) is formed by a ring (32) arranged in a housing bore, which accommodates the carrier shaft (6), with an inner cone (36) which complements the outer cone portion (30).

9. Arrangement according to one of Claims 3 to 8, **characterized in that** an outer actuation lever (8) coupled to the manual shift lever via connecting means is arranged on the drive-side end of the carrier shaft (6), and **in that** a two-arm, inner actuation lever (10) is arranged on the output-side end of the carrier shaft (6), wherein the first contour element (12) is arranged on one end of said actuation lever (10) and the second contour element (14) is arranged on the second end of said actuation lever (10).

## Revendications

1. Dispositif pour produire une force de commutation ou une force de sélection dans une boîte de vitesses à commande manuelle pour véhicules automobiles, comprenant un élément profilé (12) et un élément suiveur profilé coopérant avec celui-ci, dont l'un est dévié lors d'un mouvement de commutation ou de sélection d'un levier de commande manuelle à l'encontre de la force d'un ressort, **caractérisé en ce que** le dispositif comprend un deuxième agencement de commande profilé connecté par entraînement au levier de commande manuelle et comprenant un deuxième élément profilé (14) et un deuxième élément suiveur profilé (18), dont l'élément dévié lors d'un mouvement de commutation ou de sélection du levier de commande manuelle actionne un frein à friction (31).

2. Dispositif selon la revendication 1, **caractérisé en ce que** le premier élément profilé (12) et le deuxième élément profilé (14) sont disposés sur un support d'élément profilé commun (6) connecté fonctionnellement au levier de commande manuelle et déplacé lors d'un mouvement de commutation ou de sélection, et **en ce que** le deuxième élément profilé (14) coopère avec un élément suiveur profilé (18), lequel élément profilé (14) est dévié lors d'un mouvement de commutation ou de sélection et actionne le frein à friction (31).

3. Dispositif selon la revendication 2, **caractérisé en ce que** le support d'élément profilé est réalisé sous forme d'arbre de support (6) monté à rotation dans un boîtier fixe (2), dont une extrémité est connectée par entraînement au levier de commande manuelle et à l'autre extrémité duquel sont disposés les deux éléments profilés (12, 14) déplacés lors d'une rotation de l'arbre de support (6).

4. Dispositif selon la revendication 3, **caractérisé en ce que** l'arbre de support (6) est monté avec jeu axial dans le boîtier (2), **en ce que** des surfaces de friction coopérantes sont prévues sur l'arbre de support (6) d'une part et sur le boîtier (2) d'autre part, lesquelles peuvent être amenées en engagement de freinage par un déplacement axial de l'arbre de support (6) par rapport au boîtier (2) dans une première direction axiale et peuvent être amenées hors d'engagement de freinage par un mouvement opposé, et **en ce que** le deuxième élément suiveur profilé (18) s'appuie élastiquement sur le boîtier (2) de telle sorte que dans le cas d'une rotation de l'arbre de support (6) suite à un mouvement de commutation ou de sélection, l'arbre de support (6) soit déplacé par rapport au boîtier (2) dans la première direction axiale.

5. Dispositif selon la revendication 4, **caractérisé en ce que** le deuxième élément suiveur profilé (18) est réalisé sous forme d'un boulon à ressort (19) parallèle à l'axe longitudinal (16) de l'arbre de support (6), s'appuyant élastiquement contre le boîtier (2).

6. Dispositif selon la revendication 5, **caractérisé en ce que** le boulon à ressort (19) comprend une douille (20) disposée fixement sur le boîtier (2), ouverte vers l'élément profilé associé (14), et un élément de pressage (22) monté de manière déplaçable axialement dans celle-ci, précontraint par un ressort (24) disposé dans la douille (20) dans la direction de l'élément profilé (14).

7. Dispositif selon la revendication 6, **caractérisé en ce que** l'élément de pressage (22) comprend un piston (26) déplaçable dans la douille (20) et une bille (28) montée de manière à rouler sur son côté tourné vers l'élément profilé (14), s'appliquant contre l'élément profilé (14).

8. Dispositif selon l'une quelconque des revendications 3 à 7, **caractérisé en ce que** la surface de friction de l'arbre de support (6) est formée par une portion conique extérieure (30) réalisée sur celui-ci, et **en ce que** la surface de friction du boîtier (2) est formée par une bague (32) disposée dans un alésage de boîtier recevant l'arbre de support (6), avec un cône interne (36) complémentaire de la portion conique extérieure (30).

9. Dispositif selon l'une quelconque des revendications 3 à 8, **caractérisé en ce qu'**à l'extrémité de l'arbre de support (6) du côté de l'entraînement est disposé un levier d'actionnement extérieur (8) accouplé au levier de commande manuelle par le biais de moyens de liaison, et **en ce qu'**à l'extrémité de l'arbre de support (6) du côté de la prise de force est disposé un levier d'actionnement intérieur (10) à deux bras, à l'une des extrémités duquel est disposé le premier élément profilé (12) et à l'autre extrémité duquel est disposé le deuxième élément profilé (14).
